# FASCICULE DE BREVET EUROPEEN

(11) **EP 0 954 405 B1**
(45) Date de publication et mention de la délivrance du brevet: **12.03.2003**
(21) Numéro de dépôt: 98956960.3
(22) Date de dépôt: 26.11.1998
(51) Int. Cl.: B23Q 1/70

(54) **PROCEDE D'ALLONGEMENT DE LA COURSE D'USINAGE D'UNE MACHINE-OUTIL, DISPOSITIF PERMETTANT DE LE METTRE EN OEUVRE ET MACHINE-OUTIL UTILISANT UN TEL DISPOSITIF**
VERFAHREN ZUR HUBVERLÄNGERUNG BEI WERKZEUGMASCHINEN, VORRICHTUNG ZUM DURCHFÜHREN DES VERFAHRENS UND WERKZEUGMASCHINE MIT EINER SOLCHEN VORRICHTUNG
METHOD FOR LENGTHENING THE MACHINING TRAVEL OF A MACHINE-TOOL, DEVICE FOR IMPLEMENTING SAME AND MACHINE-TOOL USING SUCH A DEVICE

(30) Priorité: 27.11.1997 FR 9714953
(43) Date de publication de la demande: 10.11.1999
(73) Titulaire: Renault Automation Comau, 92365 Meudon La Forêt Cedex (FR)
(72) Inventeur: LAUR, Raymond, F-81290 Viviers les Montagnes (FR); AZEMA, André, F-81710 Saix (FR)
(74) Mandataire: Richebourg, Michel François
(86) Numéro de dépôt international: FR9802541
(87) Numéro de publication internationale: WO99028079

(56) Documents cités:
- DE-A- 3 730 762
- DE-A- 4 236 866
- US-A- 3 232 141
- US-A- 3 449 754

## Description

La présente invention a trait au domaine des machines-outils d'usinage à grande vitesse se déplaçant sur trois axes X, Y et Z et notamment aux adaptations permettant d'améliorer les courses d'usinage de ce type de machine.

Classiquement, les outils utilisés en usinage à très grande vitesse sont du type rotatifs et installés en bout d'un coulant porte-outil unique monté mobile sur trois axes afin de d'autoriser l'usinage sur une grande longueur, une grande largeur et une grande profondeur, ainsi que les opérations de changement, de préhension et de dépôt des outils dans des magasins conçus à cet effet.

En général, ces machines comportent plusieurs parties principales, à savoir :
- un poste d'usinage proprement dit comportant l'outil entraîné en rotation en bout du coulant et façonnant la pièce à usiner,
- un poste d'entraînement situé après le poste d'usinage et constitué d'un ensemble d'organes d'entraînement assurant les déplacements selon les axes X, Y, Z du coulant porte-outil, lequel assure également, par l'intermédiaire d'une électro-broche, le mouvement de rotation de l'outil porté en bout,
- un poste de commande collaborant avec le poste d'entraînement en fonction d'un programme d'instructions préétablies pour assurer et pour gérer les différentes gammes et phases d'usinage des différentes pièces à usiner.

Le poste d'usinage peut comporter classiquement plusieurs sous-ensembles proposant autant de fonctionnalités supplémentaires. Ainsi, par exemple, un magasin ou un dispositif d'emmagasinage d'outils propose au coulant mobile sur trois axes venant les déposer et les prendre, plusieurs outils d'usinage lui permettant d'assurer le plus d'opérations d'usinage possibles sur une pièce. Le poste d'usinage peut aussi comporter un dispositif de changement de pièces à usiner, géré par la parue commande et assurant l'échange entre les pièces venant d'être usinées et celle encore brutes.

Forte de son expérience dans le domaine de l'usinage à grande vitesse sur trois axes et sur les machines dite mono-broche, la demanderesse a conçu des machines très précises et à grande vélocité atteignant des accélérations et une rapidité d'exécution dans leurs déplacements sur les trois axes X, Y et Z par l'utilisation d'une structure logique cinématique et de moyens d'entraînement originaux, très au dessus de celles qu'autorisaient les machines à usiner classiques. La demanderesse a constaté que ces machines, bien que répondant jusqu'à maintenant aux besoins des utilisateurs peuvent se révéler dans certaines applications limitées dans leur courses d'usinage. En effet, pour répondre aux nouveaux critères d'accélérations et de vitesse d'exécution exigés pour les machines-outils d'usinage à très grande vitesse, critères qui s'associent au souci de compacité de la machine, les courses suivant les différents axes sont comprises dans des intervalles définis par des limites mécaniques ou géométriques de la machine, intervalles qui peuvent se révéler trop courts pour certaines applications.

La limitation de la course est une difficulté souvent rencontrée dans la conception de machines-outils et il existe dans l'art antérieur plusieurs dispositifs, assurant un déplacement de la pièce afin de permettre son rapprochement de l'outil et d'éviter ainsi des courses mais aussi des temps de courses inutiles (jusqu'à ce que l'outil soit en contact avec la pièce et commence la phase d'usinage) qui grèveraient les performances de la machine. Néanmoins, aucun dispositif n'a été conçu pour permettre l'allongement de la course d'usinage d'une machine-outil d'usinage du type de celle comprenant un coulant porte-outil qui, assurant les opérations de préhension, de changement, de guidage, et d'entraînement des outils, se déplace sur trois axes X, Y et Z, les trois axes formant un repère spatial orthogonal et Z étant l'axe longitudinal de la machine et dont les déplacements étant assurés, telles que les machines conçues par la demanderesse, par des moteurs linéaires. En effet, la totale liberté de déplacement du coulant porte-outil associée à sa rapidité due à l'utilisation de moteurs linéaires, amène de nouveaux critères techniques et ouvre un champ de possibilités dans la programmation des usinages sur une pièce, jamais atteintes jusqu'à aujourd'hui. Les machines-outils existantes utilisant un coulant porte-outil se déplaçant sur trois axes sont, pour la plupart, moins rapides ou moins précises, et n'ont pas les contraintes dynamiques de celles conçues par la demanderesse, du fait de leur dimensions, des courses plus grandes obtenues, ou des moyens d'entraînement moins performants. En outre, les dispositifs existants qui assurent le mouvement de la pièce à usiner sont indispensables à la phase d'usinage qui suit car les outils des machines-outils classiques n'adoptent pas de mouvements parallèles aux mouvements de la pièce. Ainsi, sur les axes suivis pour les mouvements de la pièce à usiner, le coulant, la poupée et/ou la broche porte-outil restent fixes.

La demanderesse a donc étudié la conception d'un procédé original permettant d'élargir les capacités de courses d'usinage des machines. La difficulté d'une telle conception est de proposer un dispositif permettant de s'adapter à une machine répondant déjà parfaitement aux besoins des utilisateurs dans la plupart des applications et pour la plupart des pièces à usiner afin qu'il ne soit pas proposé "d'origine" pour éviter un surcoût lorsque ledit dispositif n'est pas nécessaire. De plus, comme l'augmentation des longueurs des courses d'usinage d'une machine-outil a pour conséquence directe et connue de diminuer la vélocité de ladite machine, un tel dispositif sera mis en fonctionnement ou sera opérationnel seulement lorsque la pièce ou le côté de la pièce à usiner, (par l'intermédiaire du programme d'usinage) l'exigera.

Partant de cet état de fait et de ce cahier des charges, la demanderesse a mené des recherches visant à atteindre les objectifs susmentionnés. Ces recherches ont abouti à la conception d'un procédé ne diminuant pas les performances de la machine-outil d'usinage de base, intégrable mais non intégré "d'origine" à celle-ci, et permettant une fois mis en fonctionnement, l'usinage de pièces plus longues, plus larges ou plus hautes.

Selon la caractéristique principale de l'invention, le procédé d'allongement de la course d'usinage d'une machine-outil d'usinage à grande vitesse du type de celle comprenant un coulant porte-outil assurant la préhension, le changement, le guidage, l'entraînement des outils et se déplaçant sur trois axes X, Y et Z, les trois axes formant un repère spatial orthogonal et Z étant l'axe longitudinal de la machine, les déplacements étant assurés par des moteurs linéaires, est remarquable en ce qu'il consiste à associer aux mouvements d'usinage du coulant porte-outil suivant un ou plusieurs axes, un ou plusieurs mouvements rectilignes de la pièce à usiner en paramétrant et en numérisant les courses et vitesses relatives de la pièce à usiner par rapport au coulant porte-outil.

Ce procédé est particulièrement avantageux car il permet d'allonger la course utile du coulant porte-outil de la machine-outil sans en diminuer les performances dynamiques. En effet, la mobilité sur un ou plusieurs axes de la pièce à usiner par rapport à un coulant porte-outil déjà mobile sur ces trois axes permet non seulement de rapprocher la pièce pour éviter les temps de non usinage et diminuer la course inutile du coulant porte-outil, ce que faisaient classiquement les dispositifs de l'art antérieur mais aussi de diminuer ces temps de rapprochement en déplaçant le coulant porte-outil et la pièce suivant des axes parallèles mais dans un sens contraire diminuant ainsi les temps morts. Dans cette application précise, une fois la pièce et le coulant porte-outil proches, plusieurs configurations d'usinage sont possibles :
- soit le coulant porte-outil est seul à réaliser la course en entraînant l'outil en rotation vers la pièce fixe,
- soit la pièce est seule à réaliser la course en se déplaçant vers le coulant porte-outil fixe avec l'outil entraîné en rotation,
- soit la pièce et le coulant porte-outil se déplace et tous les deux selon une direction parallèle mais dans un sens contraire.

Suivant une caractéristique particulièrement avantageuse de l'invention, ce procédé consiste à paramétrer et à numériser les courses et vitesses relatives de la pièce à usiner par rapport aux courses sur l'axe Z du coulant porte-outil. Cette caractéristique est particulièrement originale du fait que la plupart des machines-outils n'utilisent pas de coulant porte-outil assurant une translation sur l'axe Z et l'adéquation entre la translation sur l'axe Z du coulant porte-outil et une translation parallèlement à l'axe Z de la pièce à usiner dans une même direction. Cette adéquation nécessite donc la maîtrise de paramètres nouveaux

L'invention concerne également le dispositif permettant de mettre en oeuvre, le procédé d'allongement de la course d'usinage d'une machine-outil d'usinage à grande vitesse du type de celle comprenant un coulant porte-outil se déplaçant sur trois axes X, Y et Z, les trois axes formant un repère spatial orthogonal et Z étant l'axe longitudinal de la machine, les déplacements étant assurés par des moteurs linéaires. Ce dispositif est remarquable en ce qu'il comprend, à l'intérieur de la zone d'usinage, un sous-ensemble de bridage porte-pièce associé à un sous-ensemble d'entraînement assurant la translation sur un ou plusieurs axes parallèles aux axes de mouvement du coulant porte-outil, du sous-ensemble de bridage porte-pièce. De plus, ledit sous-ensemble d'entraînement comporte des moteurs linéaires qui entraînent en translation, en synchronisation avec les mouvements du coulant porte-outil et sur des paires de rails respectivement parallèles aux axes X, Y, Z de déplacement dudit coulant porte-outil, ledit sous-ensemble de bridage porte-pièce. Ainsi, les mouvements de la pièce à usiner sont réalisés au moyen des mêmes actionneurs que pour les mouvements du coulant porte-outil. Cette cohérence dans le choix des moyens d'entraînement permet de produire des mouvements de pièces aussi rapides que les mouvements du coulant porte-outil et évite de pénaliser les performances de l'ensemble de la machine tout en assurant un allongement des courses.

En outre, contrairement aux dispositifs de l'art antérieur, le mouvement de la pièce n'est pas obligatoire au fonctionnement de la machine-outil lors d'un usinage simple permettant ainsi de laisser la pièce en position fixe.

L'invention concerne également la machine-outil d'usinage adoptant le dispositif de l'invention. Cette machine-outil est du type de celle comportant un poste d'usinage, un poste d'entraînement, un poste de commande, ledit poste d'usinage adoptant au moins un ensemble mobile de déplacement ou de changement de pièce à usiner de l'invention, ledit ensemble mobile comportant un dispositif d'étanchéité isolant le poste d'usinage de l'extérieur afin d'éviter les projections de copeaux et est remarquable en ce qu'elle développe autour dudit ensemble mobile, et donc de son propre dispositif d'étanchéité un dispositif d'isolation, lié à son bâti, séparant le poste d'usinage et les éléments le constituant de l'extérieur.

Cette caractéristique se justifie par les nouvelles contraintes exigées pour la rapidité des mouvements lors des déplacements de la pièce à usiner. En effet, de tels dispositifs de changement de pièces ou de déplacement de pièces à usiner, comporte classiquement un dispositif d'étanchéité constitué par un capotage ou une paroi de séparation qui permet de séparer le poste d'usinage et éviter ainsi la projection de copeaux à l'intérieur Les mouvements du dispositif de l'invention obligent les concepteurs à assurer l'étanchéité de l'ensemble mobile par rapport au bâti fixe de la machine par frottements. Or, les critères de rapidité exigés pour les mouvements d'un tel dispositif sont tels que les frottements doivent être limités au maximum au détriment de l'étanchéité aux copeaux. Ainsi, la solution technologique de l'invention permet d'assurer une deuxième protection autour des éléments constituant le poste d'usinage de la machine-outil afin d'éviter la propagation des copeaux qui seraient passés au delà du premier capotage ou de la première protection. Un autre avantage de cette double protection est que, bien que protégés par leur propre capotage ou paroi de séparation, les éléments constituant le poste d'usinage de la machine-outil et notamment le dispositif d'allongement de la course de l'invention qui est un dispositif mobile peuvent se révéler dangereux pour les manipulateurs, utilisateurs ou techniciens se trouvant à proximité. La présence de cette deuxième protection permet donc de répondre aux critères de sécurité du travail.

Les concepts fondamentaux de l'invention venant d'être exposés dans leur forme la plus élémentaire, d'autres détails et caractéristiques ressortiront plus clairement à la lecture de la description qui suit donnant à titre d'exemple non limitatif et en regard des dessins annexés, un dispositif permettant de mettre en oeuvre le procédé de l'invention et d'une machine-outil utilisant un tel dispositif conformes à l'invention.

Cette description se réfère aux dessins annexés sur lesquels :
La figure 1 est une vue en perspective d'une machine-outil comportant un dispositif conforme à l'invention,
La figure 2 est une vue en perspective du dispositif d'allongement de la course d'usinage conforme à l'invention,
La figure 3 est une vue en perspective d'une machine-outil conforme à l'invention comportant une paroi d'étanchéité supplémentaire.

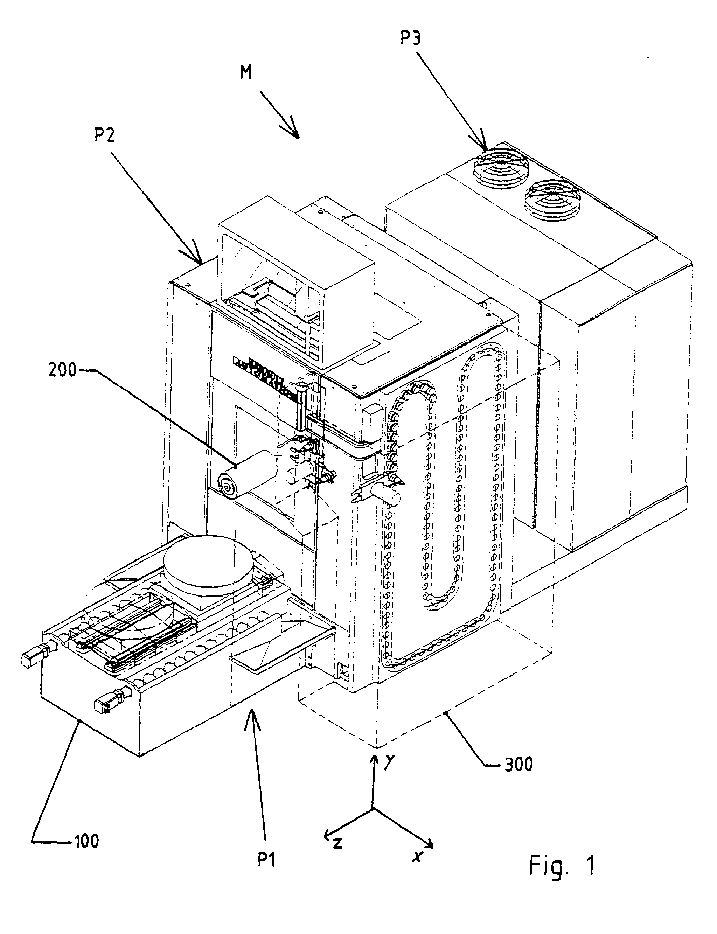

Comme illustrée sur le dessin de la figure 1, le dispositif d'allongement de la course d'usinage référencé 100 dans son ensemble est accolé à une machine-outil d'usinage M à grande vitesse du type de celle comprenant un coulant porte-outil 200 se déplaçant sur trois axes X, Y et Z, les trois axes formant un repère spatial orthogonal et Z étant l'axe longitudinal de la machine, les déplacements étant assurés par des moteurs linéaires. Cette machine-outil d'usinage comporte classiquement, plusieurs parties principales, à savoir :
- un poste d'usinage P1 proprement dit comportant l'outil entraîné en rotation en bout du coulant porte-outil 200 et façonnant la pièce à usiner,
- un poste d'entraînement P2 situé après le poste d'usinage P1 et constitué d'un ensemble d'organes d'entraînement assurant les déplacements selon les axes X, Y, Z du coulant porte-outil 200, lequel assure également, par l'intermédiaire d'une électro-broche, le mouvement de rotation de l'outil porté en bout,
- un poste de commande P3 collaborant avec le poste d'entraînement P2 en fonction d'un programme d'instructions préétablies pour assurer et gérer les différentes gammes et phases d'usinage des différentes pièces à usiner.

La machine-outil M telle qu'illustrée comporte également un dispositif d'emmagasinage d'outils 300 qui propose au coulant porte-outil 200 venant les chercher et les déposer, plusieurs outils d'usinage lui permettant d'assurer le plus d'opérations d'usinage possibles sur une pièce.

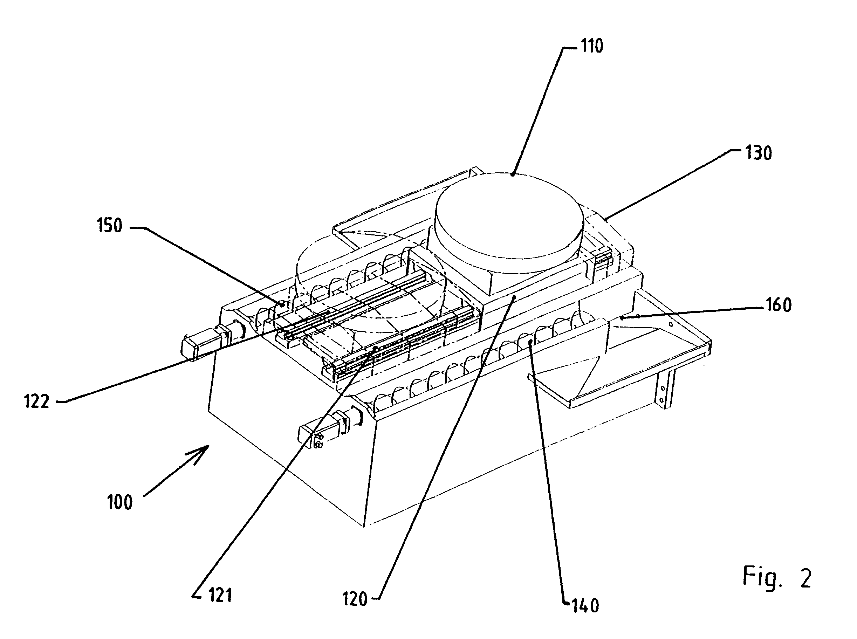

Tel qu'illustré sur le dessin de la figure 2 et selon une caractéristique particulièrement avantageuse de l'invention, le dispositif d'allongement 100 se compose, à l'intérieur du poste d'usinage P1, d'un sous-ensemble de bridage porte-pièce 110 associé à un sous-ensemble d'entraînement 120 assurant la translation parallèlement à l'axe Z de mouvement du coulant porte-outil 200, du sous-ensemble de bridage porte-pièce 110.

Cette seule translation supplémentaire associée aux mouvements sur trois axes du coulant porte-outil 200, permet de répondre aux besoins d'allongement des courses d'usinage sur les trois axes classiques. En effet, selon un mode de réalisation non limitatif, le sous-ensemble de bridage porte-pièce comporte un axe de rotation, appelé classiquement axe B de façon à présenter, au coulant porte-outil 200, les différents côtés de la pièce à usiner. Ce mouvement de rotation associé au mouvement de translation en Z de la pièce et les possibilités de déplacements et de changements d'outils du coulant porte-outil 200 permettent d'assumer tout en allongeant la course, la plupart des usinages.

De plus, la mobilité du sous-ensemble de bridage porte-pièce 110 a pour autre avantage de permettre sa rotation classique selon un axe vertical (appelé généralement axe B) parallèle à l'axe Y. En effet, la rapidité d'exécution d'une phase d'usinage demandant le rapprochement maximum entre la pièce et le coulant porte-outil 200, un tel rapprochement bien que possible empêcherait, la rotation de la pièce lorsque la phase d'usinage change par contact direct de la pièce sur l'outil ou le coulant porte-outil.

De plus, dans d'autre configuration, le sous-ensemble de bridage porte-pièce 110 assurent le support de plusieurs pièces à usiner séparées par une paroi d'étanchéité évitant la projection des copeaux d'usinage sur les pièces non encore usinées ou sur les appuis de celles-ci lorsqu'elles sont enlevées du du sous-ensemble de bridage porte-pièce. De telles parois d'étanchéité sont solidaires du sous-ensemble de bridage porte-pièce 110 et tourne en même temps ce qui implique que le poste d'usinage doit être suffisamment large pour permettre une telle rotation. La translation du sous-ensemble de bridage porte-pièce permet donc la rotation de pièce et d'ensemble d'usinage volumineux impossible à utiliser dans un dispositif de bridage porte-pièce classique fixe ce qui facilite grandement la mise au point des montages d'usinage et des cabines de poste d'usinage.

Comme illustré sur le dessin de la figure 2 et selon une caractéristique particulièrement avantageuse de l'invention, ledit sous-ensemble d'entraînement 120 comporte des moteurs linéaires qui entraînent en translation, en synchronisation avec les mouvements du coulant porte-outil 200, sur une paire de rails 121 et 122 parallèle à l'axe Z de déplacement dudit coulant porte-outil 200, ledit sous-ensemble de bridage porte-pièce 110. L'utilisation d'une paire de rails a pour avantage de permettre l'utilisation des moteurs linéaires dans de bonne conditions. De plus l'association des moteurs linéaires à des rails est la même technologie d'entraînement que celle utilisée pour le déplacement du coulant porte-outil ce qui permet non seulement de faciliter le pilotage des entraînements de la pièce en synchronisation avec ceux du coulant porte-outil 200 mais aussi de proposer des caractéristiques dynamiques d'accélérations et de vitesses du mouvement de la pièce équivalentes à celles des mouvements du coulant porte-outil 200.

Selon un mode de réalisation préférée de l'invention, les rails 121 et 122 du dispositif d'allongement de la course 100 et leurs moyens d'entraînement, ici des moteurs linéaires, sont protégés contre la projection des copeaux par un tablier télescopique 130 (représenté en trait mixte). En outre, toujours dans le cadre d'une évacuation ou protection du sous-ensemble de bridage porte-pièce 110 contre les copeaux, le tablier télescopique 130 comporte le long de la course dudit sous-ensemble et de chaque côté, un dispositif d'évacuation 140 et 150 des copeaux du type vis d'archimède ramenant lesdits copeaux vers l'orifice 160 d'évacuation principal du poste d'usinage.

Selon une caractéristique particulièrement judicieuse de l'invention, le sous-ensemble de bridage porte-pièce 110 donne accès, lorsqu'il s'éloigne du plan vertical d'usinage de la machine M, à des logements qui assurent le stockage d'outils de grandes dimensions disposés de façon à ce que le coulant porte-outil 200 puisse en assurer la préhension. Ainsi, les outils que le dispositif d'emmagasinage 300 ne peut pas stocker du fait de leur longueur peuvent être disposés dans des logements qui lors d'une phase d'usinage simple ne sont pas accessibles du fait du rapprochement de la pièce mais qui lorsque cet ou ces outils sont nécessaires à l'usinage, deviennent non seulement accessibles mais aussi utilisables par le coulant porte-outil 200 du fait du recul du sous-ensemble de bridage porte-pièce 110.

Selon une autre caractéristique particulièrement avantageuse de l'invention, le dispositif 100 de l'invention comporte des logements permettant d'accueillir des outils de grandes dimensions accessibles au coulant porte-outil de façon à ce dernier puisse en assurer la préhension. Dans cette configuration, le dispositif 100 permettant de déplacer la pièce à usiner assure la fonction d'un magasin d'outils venant placer dans le rayon d'action du coulant porte-outil 200 des outils de grandes dimensions nécessaires à l'usinage de la pièce bridée sur ledit dispositif 100.

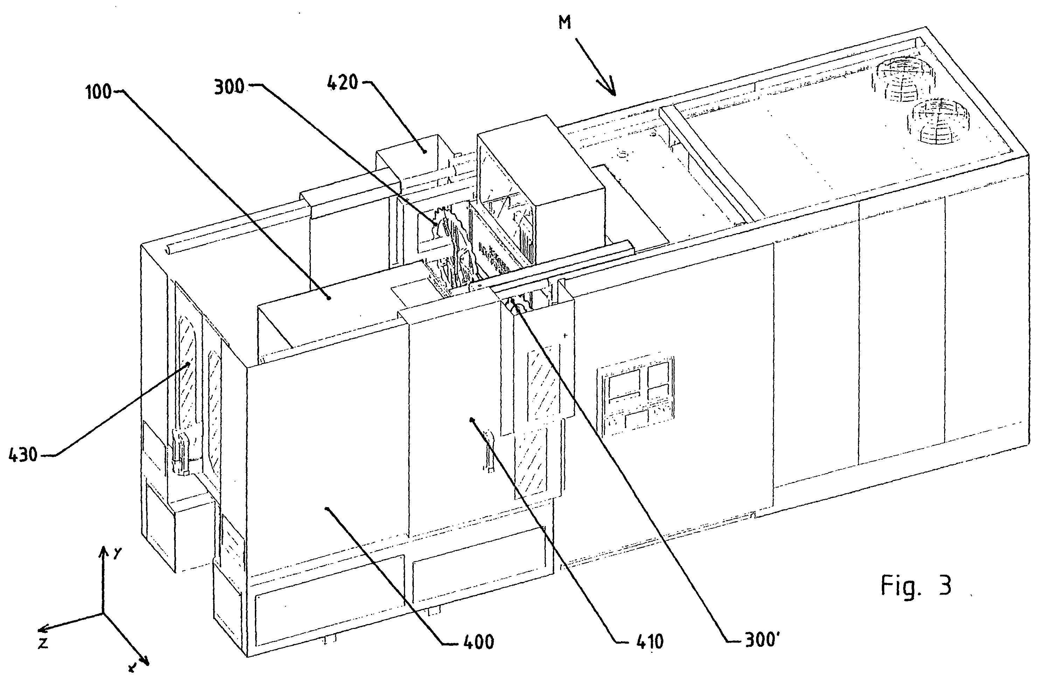

Comme illustrée sur le dessin de la figure 3, la machine-outil d'usinage référencée M dans son ensemble est du type de celle comportant un poste d'usinage P1, un poste d'entraînement P2, un poste de commande P3 et dont ledit poste d'usinage P1 comprend un dispositif 100 de d'allongement de course d'usinage de pièce à usiner conforme à l'invention. Comme décrit plus haut, de tels dispositifs mobiles 100 comprennent classiquement un dispositif d' étanchéité isolant la zone d'usinage immédiate autour du coulant porte-outil 200 et de la pièce afin d'éviter les projections de copeaux.

Selon un choix technologique particulièrement judicieux, cette machine M comporte autour dudit ensemble mobile et de son dispositif d'étanchéité une paroi d'étanchéité supplémentaire 400, liée au bâti, enveloppant le poste d'usinage dans son ensemble en le séparant de l'extérieur. Cette paroi d'étanchéité 400 a pour objectif d'améliorer l'étanchéité du poste d'usinage vis-à-vis de l'environnement extérieur et cela pour deux raisons principales :
- l'une réside dans le fait que l'étanchéité du poste d'usinage est difficile à garantir lorsque le dispositif de bridage porte-pièce tel que celui de l'invention est mobile,
- l'autre réside dans le fait que les manipulations, manutentions ou interventions techniques peuvent se révéler particulièrement dangereuses si elles sont réalisées à proximité d'un ensemble mobile.

Selon un mode de réalisation avantageux mais non limitatif, ladite paroi d'étanchéité 400 est constituée par un capotage extérieur qui prolonge le bâti de ladite machine-outil à partir de son poste d'usinage et en adopte sensiblement les mêmes dimensions extérieures au niveau de la largeur et de la hauteur.

Ce choix technologique a en outre une autre conséquence particulièrement avantageuse : les dispositifs d'emmagasinage et notamment les dispositifs d'emmagasinage rotatifs tels qu'illustrés sur le dessin de la figure 3 et référencés 300 et 300' sont classiquement disposés à l'intérieur d'une enceinte étanche de dimensions autorisant leur rotation et mettant à disposition du coulant porte-outil, les outils stockés. En effet, ils peuvent ici évoluer dans l'espace séparant la première paroi isolant l'environnement immédiat de la zone d'usinage (c'est à dire l'outil, le coulant porte-outil et la pièce à usiner), ladite zone d'usinage étant délimitée par le dispositif d'étanchéité du dispositif porte-pièce et par la paroi du poste d'usinage de la machine-outil, de la deuxième paroi 400 et éviter donc l'utilisation d'une enceinte étanche spécifique au magasin d'outil.
L'utilisation de dimensions sensiblement égales aux dimensions du bâti extérieur de la machine-outil M en ce qui concerne la largeur et la hauteur a pour avantage de respecter les critères de compacité exigés pour les dimensions de telles machines.

Comme illustré et selon une caractéristique particulièrement avantageuse de l'invention, le capotage extérieur 400 est parallélépipèdique et comporte trois ouvertures 410, 420, 430 autorisant l'accès à l'intérieur et/ou aux éléments constituant le poste d'usinage. Ainsi, les ouvertures 410 et 420 sont, selon un mode de réalisation préférée de l'invention des portes coulissante permettant selon la course du coulissement de permettre l'accès progressivement :
- aux logements d'outils des magasins d'outils rotatifs 300 et 300' lorsque ceux-ci sont à l'arrêt mais durant l'usinage du fait de la présence de la première paroi d'étanchéité,
- au dispositif mobile conforme à l'invention.

Ces différentes ouvertures d'accès sont avantageusement munies de fenêtres de regard permettant la surveillance du bon fonctionnement de la machine-outil.

Le principe de double capotage a pour autre avantage dans ce cas précis, de diminuer la surface de protection anti-choc qui doit envelopper selon les normes de sécurité le poste d'usinage et donc de diminuer les coûts des matériaux. En effet, ce deuxième capotage extérieur permet que seule la zone d'usinage immédiate autour de l'outil et de la pièce à usiner soit protégée par des vitres blindées, des cloisons en acier. Le reste du poste d'usinage peut être protégé ou isolé de l'extérieur par la deuxième paroi 400 qui peut être avantageusement réalisée avec des matériaux moins résistants et donc moins chers, notamment les fenêtres, que ceux utilisés pour la première protection.

Afin de permettre une meilleure compréhension des dessins, une liste des références avec leurs légendes est ci-après énumérée.
- 100: Dispositif d'allongement de la course
- 110: Sous-ensemble de bridage porte-pièce
- 120: Sous-ensemble d'entraînement
- 121, 122: Rails de guidage
- 130: Capotage de protection des rails de guidage
- 140, 150: Dispositifs d'évacuation des copeaux
- 160: Orifice principal d'évacuation des copeaux
- 200: Coulant porte-outil
- 300, 300': Dispositif d'emmagasinage
- 400: Capotage extérieur
- 410, 420, 430: Ouvertures d'accès du capotage extérieur
- M: Machine-outil d'usinage dans son ensemble
- P1: Poste d'usinage
- P2: Poste d'entraînement
- P3: Poste de commande

## Revendications

1. Procédé d'allongement de la course d'usinage d'une machine-outil d'usinage (M) à grande vitesse du type de celle comprenant un coulant porte-outil (200) assurant les opérations de préhension, de changement, de guidage, d'entraînement des outils et se déplaçant sur trois axes X, Y et Z, les trois axes formant un repère spatial orthogonal et Z étant l'axe longitudinal de la machine-outil (M), les déplacements étant assurés par des moteurs linéaires, **CARACTERISE EN CE QU'**il consiste à associer aux mouvements d'usinage du coulant porte-outil (200) suivant un ou plusieurs axes, un ou plusieurs mouvements rectilignes de la pièce à usiner en paramétrant et en numérisant les courses et vitesses relatives de la pièce à usiner par rapport au coulant porte-outil (200).

2. Procédé selon la revendication 1, **CARACTERISE EN CE QU'**il consiste à paramétrer et à numériser les courses et vitesses relatives de la pièce à usiner par rapport aux courses sur l'axe Z du coulant porte-outil (200).

3. Dispositif (100) permettant de mettre en oeuvre le procédé d'allongement de la course d'usinage d'une machine-outil (M) d'usinage à grande vitesse du type de celle comprenant un coulant porte-outil (200) se déplaçant sur trois axes X, Y et Z, les trois axes formant un repère spatial orthogonal et Z étant l'axe longitudinal de la machine, les déplacements étant assurés par des moteurs linéaires, **CARACTERISE PAR LE FAIT QU'**il comprend, à l'intérieur de la zone d'usinage, un sous-ensemble de bridage porte-pièce (110) associé à un sous-ensemble d'entraînement (120) assurant la translation sur un ou plusieurs axes parallèles aux axes de mouvement du coulant porte-outil (200), du sous-ensemble de bridage porte-pièce (110).

4. Dispositif (100) selon la revendication 3, **CARACTERISE PAR LE FAIT QUE** ledit sous-ensemble d'entraînement (120) comporte des moteurs linéaires qui entraînent en translation, en synchronisation avec les mouvements du coulant porte-outil (200) et sur des paires de rails (121, 122) respectivement parallèles aux axes X, Y, Z de déplacement dudit coulant porte-outil (200), ledit sous-ensemble de bridage porte-pièce (110).

5. Dispositif (100) selon les revendications 3 et 4, **CARACTERISE PAR LE FAIT QUE** ledit sous-ensemble d'entraînement (120) assure la translation du sous-ensemble de bridage porte-pièce (110) parallèlement à l'axe Z uniquement.

6. Dispositif (100) selon les revendications 3, 4 et 5, **CARACTERISE PAR LE FAIT QUE** ledit sous-ensemble de bridage porte-pièce (110) donne accès, lorsqu'il s'éloigne du plan vertical d'usinage de la machine-outil (M), à des logements qui assurent le stockage d'outils de grandes dimensions disposés de façon à ce que le coulant porte-outil (200) puisse en assurer la préhension.

7. Dispositif (100) selon les revendications 3, 4 et 5, **CARACTERISE PAR LE FAIT QU'**il comporte des logements permettant d'accueillir des outils de grandes dimensions accessibles au coulant porte-outil (200) de façon à ce que ce dernier (200) puisse en assurer la préhension.

8. Machine-outil d'usinage (M) du type de celle comportant un poste d'usinage (P1), un poste d'entraînement (P2), un poste de commande (P3), ledit poste d'usinage (P1) adoptant au moins un ensemble mobile de déplacement ou de changement de pièce à usiner comprenant un dispositif (100) selon la revendication 3, ledit ensemble mobile comportant un dispositif d'étanchéité isolant la zone d'usinage immédiate autour du coulant porte-outil (200) et de la pièce afin d'éviter les projections de copeaux, **CARACTERISEE PAR LE FAIT QU'**elle comporte autour dudit ensemble mobile (100) et de son dispositif d'étanchéité une paroi d'étanchéité supplémentaire (400), liée au bâti, pour envelopper le poste d'usinage (P1) dans son ensemble en le séparant de l'extérieur.

9. Machine-outil d'usinage (M) selon la revendication 8, **CARACTERISEE PAR LE FAIT QUE** ladite paroi d'étanchéité (400) est constituée par un capotage extérieur qui prolonge le bâti de ladite machine-outil (M) à partir de son poste d'usinage (P1) et en adopte sensiblement les mêmes dimensions extérieures au niveau de la largeur et de la hauteur.

10. Machine-outil d'usinage (M) selon la revendication 9, **CARACTERISEE PAR LE FAIT QUE** le capotage extérieur (400) est parallélépipèdique et comporte au moins une ouverture (410, 420, 430) autorisant l'accès à l'intérieur et/ou aux éléments constituant le poste d'usinage (P1).

## Patentansprüche

1. Verfahren zur Verlängerung des Bearbeitungsweges einer Hochgeschwindigkeits-Werkzeugmaschine (M), die eine Trägerhülse (200) für ein Werkzeug aufweist zur Durchführung der Schritte des Ergreifens, des Auswechselns, der Führung und des Antriebs von Werkzeugen und die entlang dreier Achsen X, Y und Z verschiebbar ist, wobei die drei Achsen ein rechtwinkliges Raumgitter aufspannen und die Z-Achse mit der Längsachse der Werkzeugmaschine (M) zusammenfällt und wobei die Verschiebungen durch Linearmotoren bewirkt werden, **dadurch gekennzeichnet, dass** es darin besteht, den Bewegungen für die Bearbeitung durch die Trägerhülse (200) für das Werkzeug entlang einer oder mehrerer Achsen eine oder mehrere geradlinige Bewegungen des zu bearbeitenden Werkstücks zuzuordnen durch parametrieren und digitalisieren der Relativwege und Relativgeschwindigkeiten des zu bearbeitenden Werkstücks bezüglich der Trägerhülse (200) für das Werkzeug.

2. Verfahren nach Anspruch 1, **dadurch gekennzeichnet, dass** es darin besteht, die Relativwege und Relativgeschwindigkeiten des zu bearbeitenden Werkstücks bezüglich der Wege der Trägerhülse (200) für das Werkzeug entlang der Z-Achse zu parametrieren und zu digitalisieren.

3. Vorrichtung (100) zur Durchführung des Verfahrens zur Verlängerung des Bearbeitungsweges einer Hochgeschwindigkeits-Werkzeugmaschine (M), die eine Trägerhülse (200) für ein Werkzeug aufweist, die entlang dreier Achsen X, Y und Z verschiebbar ist, wobei die drei Achsen ein rechtwinkliges Raumgitter aufspannen und die Z-Achse mit der Längsachse der Maschine zusammenfällt und wobei die Bewegungen durch Linearmotoren bewirkt werden, **dadurch gekennzeichnet, dass** sie im Inneren des Bearbeitungsbereichs eine Unteranordnung (110) zum anflanschen einer Werkstückhalterung aufweist, die einer Unteranordnung (120) für den Antrieb zugeordnet ist, welche die Verschiebung der Unteranordnung (110) zum anflanschen der Werkstückhalterung entlang einer oder mehrerer Achsen parallel zu den Achsen der Bewegung der Trägerhülse (200) für das Werkzeug bewirkt.

4. Vorrichtung (100) nach Anspruch 3, **dadurch gekennzeichnet, dass** die Unteranordnung (120) für den Antrieb Linearmotoren aufweist, die die Unteranordnung (110) zum anflanschen des Werkstückhalters synchron zu den Bewegungen der Trägerhülse (200) für das Werkzeug auf Schienenpaaren (121, 122) verschieben, die parallel zu den Achsen X, Y und Z für die Verschiebung der Trägerhülse (200) für das Werkzeug verlaufen.

5. Vorrichtung (100) nach Ansprüchen 3 und 4, **dadurch gekennzeichnet, dass** die Unteranordnung (120) für den Antrieb die Verschiebung der Unteranordnung (110) zum anflanschen des Werkstückhalters ausschliesslich parallel zur Z-Achse bewirkt.

6. Vorrichtung (100) nach Ansprüchen 3, 4 und 5, **dadurch gekennzeichnet, dass** die Unteranordnung (110) zum anflanschen des Werkstückhalters, wenn sie sich von der senkrechten Bearbeitungsebene der Werkzeugmaschine (M) entfernt, den Zugang zu Aussparungen freigibt, in denen Werkzeuge grosser Abmessungen derart gelagert sind, dass sie von der Trägerhülse (200) für das Werkzeug ergriffen werden können.

7. Vorrichtung (100) nach Ansprüchen 3, 4 und 5, **dadurch gekennzeichnet, dass** sie Aussparungen zur Aufnahme von Werkzeugen grosser Abmessungen aufweist, die für die Trägerhülse (2009 für das Werkzeug derart zugänglich sind, dass diese sie ergreifen kann.

8. Werkzeugmaschine (M), die eine Bearbeitungsstation (P1), eine Antriebsstation (P2) und eine Kontrollstation (P3) aufweist, wobei die Bearbeitungsstation wenigstens eine bewegliche Anordnung zur Verschiebung oder zum Auswechseln des zu bearbeitenden Werkstücks aufweist und die eine Vorrichtung (100) nach Anspruch 3 aufweist, wobei die bewegliche Anordnung eine Abschirmanordnung für den die Trägerhülse (200) für das Werkzeug und das zu bearbeitende Werkstück unmittelbar umgebenden Bearbeitungsbereich aufweist, um diesen zu isolieren, sodass keine Späne weggeschleudert werden, **dadurch gekennzeichnet, dass** sie eine die bewegliche Anordnung (100) und deren Abschirmanordnung umgebende zusätzliche Abschirmwandung (400) aufweist, die mit dem Gestell verbunden ist zur Umhüllung der gesamten Bearbeitungsstation (P1) um sie von der Umgebung zu trennen.

9. Werkzeugmaschine (M) nach Anspruch 8, **dadurch gekennzeichnet, dass** die Abschirmwandung (400) aus einer äusseren Haube besteht, die das Gestell der Werkzeugmaschine (M) verlängert ausgehend von deren Bearbeitungsstation (P1) und die im wesentlichen die gleichen Aussenabmessungen hinsichtlich der Breite und der Höhe aufweist.

10. Werkzeugmaschine (M) nach Anspruch 9, **dadurch gekennzeichnet, dass** die äussere Haube (400) parallelepipedförmig ist und wenigstens eine Öffnung (410, 420, 430) aufweist, die den Zugang zum Inneren und/oder zu den die Bearbeitungsstation (P1) bildenden Bauteilen ermöglicht.

## Claims

1. Method for lengthening the machining travel of a high speed machine tool (M) of the type comprising a tool-carrying ram (200) which, ensuring functions of tool gripping, exchange, guidance, driving and moving along three axes X, Y and Z, the three axes forming an orthogonal spatial system of axes and Z being the longitudinal axis of the machine-tool (M) the movements being ensured by linear motors WHEREIN it consists in combining to the machining movements of the tool-carrying ram (200) along one or several axes, one or several rectilinear movements of the part to be machined by parametering and digitising the relative travels and speeds of the part to be machined with respect to the tool-carrying ram (200).

2. Method according to claim 1, WHEREIN it consists in parametering and digitising the relative travels and speeds of the part to be machined with respect to the travel along axis Z of the tool-carrying ram (200).

3. Device (100) enabling to implement the method for lengthening the machining travel of a high speed machine-tool (M) of the type comprising a tool-carrying ram (200) moving along three axes X, Y and Z, the three axes forming an orthogonal spatial system of axes and Z being the longitudinal axis of the machine, the movements being ensured by linear motors, WEREIN it comprises, inside the machining zone, a part-carrying clamping subset (110) combined with a driving subset (120) ensuring the translation on one or several axes parallel with the axes of the movements of the tool-carting ram (200), of the part-carrying clamping subset.

4. Device (100) according to claim 3, WHEREIN the said driving subset (120) comprises linear motors which drive in translation, synchronising with the movements of the tool-carrying ram (200) on pairs of rails (121,122) respectively parallel with axes X, Y and Z of the movement of the said tool-carrying ram (200), the said part-carrying clamping subset (110).

5. Device (100) according to claims 3 and 4, WHEREIN the said driving subset (120) ensures the translation of the part-carrying clamping subset (110) parallel with axis Z only.

6. Device (100) according to claims 3, 4 and 5, WHEREIN the said part-carrying clamping subset (110) allows access, when it moves away from the vertical plane of machining of the machine-tool (M), to housings which ensure the storage of tools of a large dimension arranged so that the tool-carrying ram (200) can ensure their gripping.

7. Device (100) according to claims 3, 4 and 5, WHEREIN it comprises housings enabling to receive large dimension tools accessible to the tool-carrying ram (200) so that the latter (200) can ensure its gripping.

8. Machining machine-tool (M) of the type comprising a machining station (P1), a driving station (P2), a control station (P3), the said machining station (P1) taking up at least one mobile set for moving or exchanging the parts to be machined comprising a device (100) according to the claim 3, the said mobile set comprising a sealed device isolating the immediate machining zone around the tool-carrying ram (200) and around the part so as to avoid the projection of swarf, WEREIN it comprises around the said mobile subset (100), and its leaktightness device an additional isolating wall (400), linked to the frame, to surround the machining station (P1) as a whole in separating it from the outside.

9. Machining machine-tool (M) according to claim 8, WHEREIN the said leaktightness wall (400) is constituted by an outer cover which extends the frame of the said machine-tool (M) from its machining station (P1) and takes up about the same outside dimensions at the level of the width and the height.

10. Machining machine-tool (M) according to claim 9, WHEREIN the outer cover (400) is parallelepipedic and comprises at least one opening (410, 420, 430) allowing access to the inside and/or to the elements constituting the machining station (P1).
